# EUROPEAN PATENT APPLICATION

(11) **EP 1 734 086 A1**
(43) Date of publication of application: **20.12.2006**
(21) Application number: 05719645.3
(22) Date of filing: 28.02.2005
(51) Int. Cl.: C09D 1/02, C09D 5/16, C09D 7/12

(54) **INORGANIC COATING COMPOSITION AND HYDROPHILIC COATING FILM**

(30) Priority: 07.04.2004 JP 2004113277
(71) Applicant: Asahi Glass Co., Ltd., Tokyo 100-8405 (JP)
(72) Inventor: YONEDA, Takashige, ASAHI GLASS CO., LTD., Yokohama-shi, Kanagawa 2218755 (JP); INOKUMA, Hisao, ASAHI GLASS CO., LTD., Yokohama-shi, Kanagawa 2218755 (JP); KAWAI, Youhei, ASAHI GLASS CO., LTD., Yokohama-shi, Kanagawa 2218755 (JP); NAKAHARA, Katumasa, ASAHI GLASS CO., LTD., Ichihara-shi, Chiba 2908566 (JP); KATOU, Akemi, ASAHI GLASS CO., LTD., Yokohama-shi, Kanagawa 2218755 (JP)
(74) Representative: Müller-Boré & Partner Patentanwälte
(86) International application number: PCT/JP2005/003328
(87) International publication number: WO 2005/100488

(57) **Abstract**

A subject for the invention is to form a coating film which has high transparency and excellent adhesion to organic base materials and retains long-lasting excellent effects concerning hydrophilicity, antifogging properties, droplet repellency, and antifouling properties. The invention relates to an inorganic coating composition capable of forming a hydrophilic coating film on an organic base material, the organic coating composition comprising alumina particles having an aggregate diameter in a dispersion medium of 20-400 nm and either a silicic acid oligomer or a colloidal silica, a surfactant, a water-miscible organic solvent which is capable of swelling or dissolving the organic base material and has a boiling point of 120°C or higher at an atmospheric pressure of 0.1 MPa, and water, the content of water in the inorganic coating composition being 400-1,700 parts by weight per 100 parts by weight of all solid components of the composition, and the inorganic coating composition having a concentration of the organic solvent of 1-10% by weight and a solid concentration of 0.1-20% by weight.

## Description

### Technical Field

The present invention relates to an inorganic coating composition and a hydrophilic coating film.

### Background Art

At present, organic base materials such as plastics are used in various applications including the covers of various lamps, spectacle lenses, goggles, covers of various instruments, and agricultural films because of their excellent transparency. In general, however, organic base materials such as plastics are hydrophobic and hence have a drawback, for example, that they are apt to suffer dew condensation. Especially in the case of the covers of instruments which tend to be always exposed to the outside air, there are cases where dew condensation occurs on the inner surface of the cover to pose a problem that the resultant fogging makes it impossible to read the indication. In the case of agricultural films, there are cases where the films come to have a reduced sunlight transmittance due to water droplets, fogging, or the like and this exerts adverse influences on plant growth. Because of these, it is desired to impart hydrophilicity to the surface of organic base materials such as plastics for the purpose of improving antifogging properties, droplet repellency, etc.

A known technique for imparting hydrophilicity to the surface of an organic base material is to form an inorganic layer on the surface. Examples thereof include a method in which an inorganic coating material containing an alumina sol and a silica sol is applied and dried to form a coating film (patent document 1). This method, however, has had a problem that since the alumina particles and silica particles in the coating film formed are adherent to the organic base material by the action of a surfactant, the coating film has poor adhesion to the base material.

On the other hand, a coating material comprising hydrophobized silica, water, and an organic solvent having the property of dissolving organic base materials, such as Cellosolve acetate, has been disclosed as a technique for forming a tenacious silica film on an organic base material, e.g., a polycarbonate (patent document 2). However, this technique has had a problem that since the organic solvent having the property of dissolving organic base materials is contained in a large amount, the coating material considerably erodes the organic base material and the coated product obtained is apt to be milk-white. In addition, a hydrophilic coating film has not been obtained because of the use of hydrophobic silica.

Patent Document 1: JP-A-60-69181 (Examples 4-6)
Patent Document 2: U.S. Patent 4,413,088 (Examples)

### Disclosure of the Invention

### Problems that the Invention is to Solve

An object of the invention is to provide: an inorganic coating composition capable of forming a coating film which has high transparency and excellent adhesion to organic base materials and retains long-lasting excellent effects concerning hydrophilicity and the antifogging, droplet-repellent, and antifouling properties accompanying the hydrophilicity; and a hydrophilic coating film.

### Means for Solving the Problems

The invention provides an inorganic coating composition capable of forming a hydrophilic coating film on an organic base material, the organic coating composition comprising:
alumina particles whose aggregates in a dispersion medium have an average particle diameter (hereinafter referred to as aggregate diameter) of 20-400 nm;
either a silicic acid oligomer from which 95% or more of the alkali metal has been removed (hereinafter referred to as present silicic acid oligomer) or a colloidal silica obtained by aging the oligomer (hereinafter referred to as present colloidal silica);
a surfactant;
a water-miscible organic solvent which is capable of swelling or dissolving the organic base material and has a boiling point of 120°C or higher at an atmospheric pressure of 0.1 MPa (hereinafter referred to as present organic solvent); and
water,
wherein the content of water is 400-1,700 parts by weight per 100 parts by weight of all solid components of the inorganic coating composition, and the inorganic coating composition has a concentration of the present organic solvent of 1-10% by weight and a solid concentration of 0.1-20% by weight.

### Advantage of the Invention

According to the invention, an inorganic coating composition can be obtained which is capable of forming a coating film having high transparency, high adhesion to organic base materials, and high hydrophilicity and excellent also in antifogging properties, antifouling properties, and droplet repellency. A hydrophilic coating film can be further obtained by the invention.

### Best Mode for Carrying Out the Invention

The inorganic coating composition of the invention comprises: alumina particles having an aggregate diameter in a dispersion medium of a 20-400 nm and the present silicic acid oligomer or present colloidal silica; a surfactant; the present organic solvent; and water.

As the alumina particles, conventionally known ones having various crystal structures can be used. Preferred are α-alumina, gibbsite, bialite, boehmite, γ-alumina, and the like. Incorporation of such alumina particles in the inorganic coating composition is preferred because this enables the formation of a highly hydrophilic coating film. In particular, the alumina particles especially preferably are ones having the crystal structure of boehmite or γ-alumina because the coating film obtained has satisfactory transparency.

The alumina particles in the invention are ones which, when dispersed in a dispersion medium, form dispersed aggregates to give an alumina sol. This alumina sol should have an aggregate diameter of 20-400 nm. Aggregate diameters smaller than 20 nm are undesirable because the coating film obtained has a reduced pore volume and hence is less apt to adsorb water. There is a possibility that this coating film might have insufficient hydrophilicity and reduced antifogging properties. Aggregate diameters larger than 400 nm are undesirable because the coating film obtained has an increased pore volume and hence is apt to scatter incident light. There is a possibility that this coating film might have impaired transparency and reduced mechanical strength. The aggregate diameter especially preferably is 40-250 nm. Incidentally, the average particle diameter of the primary particles (hereinafter referred to as primary-particle diameter) of the alumina particles is preferably 3-20 nm, especially preferably 5-15 nm.

The xerogel obtained by removing the solvent from the alumina sol described above preferably has a pore volume of 0.3-1.5 mL/g. Pore volumes thereof smaller than 0.3 mL/g are undesirable because the coating film obtained has reduced antifogging properties. Pore volumes thereof exceeding 1.5 mL/g are undesirable because there is a possibility that the coating film might have impaired transparency and reduced mechanical strength. The pore volume thereof especially preferably is 0.5-1.2 mL/g. It is preferred that the pore volume of the xerogel be measured by the nitrogen adsorption/desorption method.

The present silicic acid oligomer or present colloidal silica functions as a binder which bonds the alumina particles to one another in coating film formation. As the present silicic acid oligomer or present colloidal silica, ones obtained by various methods can be suitably used. Preferred are ones obtained by a method in which a silicic acid alkoxide such as ethyl silicate is hydrolyzed, a method which comprises decomposing an alkali metal silicate with an acid and then conducting electrodialysis, a method in which an alkali metal silicate is peptized, a method in which an alkali metal silicate is dialyzed with an ion-exchange resin, and the like.

Especially preferred of those is the present silicic acid oligomer or present colloidal silica obtained by the method in which an alkali metal silicate is dialyzed with an ion-exchange resin. This is because this method yields a high-purity product. The present silicic acid oligomer obtained by this method is most preferred because it shows high bonding force in coating film formation. It is preferred that the alkali metal silicate to be used be sodium silicate, potassium silicate, lithium silicate, or the like. As the ion-exchange resin can be used a conventionally known one. For example, it is preferred to use a cation-exchange resin having -SO₃H groups, -COOH groups, or other groups. The amount of alkali metal ions to be removed can be regulated by controlling the amount of the cation-exchange resin to be used, contact time, method of contact, etc. In this description, the term silicic acid oligomer means a silicic acid compound which in a dispersion medium is made up of about 2-20 SiO₂ molecules polymerized.

In the present colloidal silica, the primary-particle diameter of the silica particles in a dispersion medium is preferably 2-100 nm. Primary-particle diameters of the silica particles exceeding 100 nm are undesirable because there is a possibility that such silica particles might be reduced in the function of bonding alumina particles to one another and the coating film to be obtained might have poor mechanical strength and poor transparency. The primary-particle diameter of the silica particles is especially preferably 2-20 nm, most preferably 2-10 nm.

The present silicic acid oligomer or the present colloidal silica should be one from which 95% or more of the alkali metal has been removed. Incorporation of the present silicic acid oligomer or the present colloidal silica is preferred because an inorganic coating composition having an alkali metal ion concentration of 500 ppm or lower is obtained. An inorganic coating composition having an alkali metal ion concentration exceeding 500 ppm is undesirable because there is a possibility that the alumina particles and the present silicic acid oligomer or present colloidal silica in this inorganic coating composition might aggregate, resulting in reduced storage stability. The alkali metal ion concentration of the inorganic coating composition is especially preferably 5-80 ppm. This range is preferred because it enables a coating film having excellent weatherability to be obtained.

In the invention, any of anionic surfactants, cationic surfactants, and nonionic surfactants can be used as the surfactant. Incorporation of the surfactant is preferred because the coating composition has the excellent property of wetting organic base materials. The surfactant preferably is a nonionic surfactant having the structural unit -CH₂CH₂O-, -SO₂-, -NR- (R is a hydrogen atom or an organic group), -NH₂-, -SO₃Y, or -COOY (Y is a hydrogen atom, sodium atom, potassium atom, or ammonium ion). Especially preferred of such surfactants is a nonionic surfactant having the structural unit -CH₂CH₂O- because there is no possibility that this surfactant might impair the storage stability and hydrophilicity of the inorganic coating composition. Examples of nonionic surfactants include alkyl polyoxyethylene ethers, alkyl polyoxyethylene-polypropylene ethers, fatty acid/polyoxyethylene esters, fatty acid/polyoxyethylene-sorbitan esters, fatty acid/polyoxyethylene-sorbitol esters, alkylpolyoxyethylenamines, alkylpolyoxyethylenamides, and polyether-modified silicone surfactants.

In the invention, use of the present organic solvent in the inorganic coating composition enables the composition to give a coating film having improved adhesion. Although the mechanism by which use of the present organic solvent improves adhesion to organic base materials has not been elucidated, it is presumed as follows. The organic solvent swells or dissolves an organic base material to thereby form micro defect parts in the surface of the organic base material, and alumina particles and silica enter the micro defect parts. Thereafter, the present organic solvent volatilizes, upon which resin shrinkage occurs in a surface part of the organic base. As a result, the alumina particles and the present silicic acid oligomer or silica particles in the present colloidal silica are fixed in the state of being embedded in the organic base material.

The present organic solvent should be one which, in preparing the inorganic coating composition, is miscible with the water in the inorganic coating composition, i.e., which does not cause the inorganic coating composition to suffer phase separation. From this standpoint, the present organic solvent preferably has a solubility in water of 2 or higher. In the invention, the term solubility in water means the amount (g) of the present organic solvent which can be dissolved in 100 g of water at a temperature of 20°C. Furthermore, the present organic solvent has a boiling point of 120°C or higher at an atmosphere pressure of 0.1 MPa. Due to this, the present organic solvent can remain longer in the inorganic coating composition in the stage of drying after application than other solvents and water, whereby the effect described above can be produced. The present organic solvent especially preferably has a boiling point of 160-300°C at an atmospheric pressure of 0.1 MPa. The present organic solvent preferably comprises any one member selected from the group consisting of diglyme, N,N-dimethylformamide, N,N-dimethylacetamide, ethyl acetoacetate, N-methyl-2-pyrrolidinone, 1,3-dimethyl-2-imidazolidinone, and dimethyl sulfoxide.

The inorganic coating composition of the invention can suitably contain one or more organic solvents other than the present organic solvent according to need. The organic solvents other than the present organic solvent preferably are ones having a lower boiling point than the present organic solvent so as to vaporize earlier than the present organic solvent during drying after application. Examples of the organic solvents other than the present organic solvent include methanol, ethanol, n-propanol, isopropanol, n-butanol, isobutanol, sec-butanol, t-butanol, and ethylene glycol.

The inorganic coating composition of the invention can suitably contain a hydrophilic polymer according to need. Incorporation of a hydrophilic polymer is preferred because it has the effect of improving the strength of the coating film to be obtained. Examples of the hydrophilic resin include poly(acrylic acid), poly(vinyl alcohol), polybutyrals, polyurethanes, and cellulose. The amount of the hydrophilic polymer to be added is preferably not larger than 100 parts by weight per 100 parts by weight of the solid components of the inorganic coating composition. Amounts of the hydrophilic polymer exceeding 100 parts by weight are undesirable because there is a possibility that the prolonged retention of hydrophilicity and the wear resistance might become poor. The amount of the hydrophilic polymer to be added is especially preferably up to 50 parts by weight per 100 parts by weight of the solid components of the inorganic coating composition.

The inorganic coating composition of the invention can suitably contain additives such as a dye for coloration, pigment, ultraviolet absorber, antioxidant, etc. according to need.

In the inorganic coating composition of the invention, the content of water should be 400-1,700 parts by weight per 100 parts by weight of all solid components. The water in the inorganic coating composition functions to stabilize the dispersibility of the alumina particles and the present silicic acid oligomer or present colloidal silica. It is thought that in the inorganic coating composition, the alumina particles and the present silicic acid oligomer or present colloidal silica form composite particles by means of the Coulomb force and water is adsorbed onto these composite particles to form an electric double layer, whereby the particles are stably present in the inorganic coating composition. For forming this electric double layer, the presence of a highly polar solvent is necessary. Water is thought to play this role. Consequently, the amount of water is thought to depend on solid components of the inorganic coating composition of the invention. Water contents less than 400 parts by weight are undesirable because there is a possibility that the alumina particles and the present silicic acid oligomer or present colloidal silica in the inorganic coating composition might come to have reduced stability and, hence, the composite particles might aggregate and precipitate. Water contents exceeding 1,700 parts by weight are undesirable because there is a possibility that the inorganic coating composition might have reduced wetting properties and hence impaired applicability. The content of water is preferably 500-1,100 parts by weight.

The amount of the present organic solvent should be 1-10% by weight based on the weight of the inorganic coating composition. As stated above, the present organic solvent is thought to function to swell or dissolve an organic base material and thereby embed the alumina particles and the present silicic acid oligomer or present colloidal silica in the base material. Consequently, the present organic solvent may be present in an amount sufficient to enable the solvent to cover the surface of the organic base material, and the amount thereof in the inorganic coating composition depends not on the solid content but on the overall concentration. Concentrations of the present organic solvent lower than 1% by weight are undesirable because there is a possibility that the coating composition might give a coating film having reduced adhesion to the organic base material. Concentrations of the present organic solvent exceeding 10% by weight are undesirable because there is a possibility that the erosion of the organic base material might be enhanced, resulting in impaired surface smoothness and reduced coating film transparency. In addition, there is a possibility that the coating film might have an impaired appearance. The concentration of the present organic solvent is especially preferably 3-7% by weight.

The inorganic coating composition of the invention should have a solid concentration of 0.1-20% by weight. Solid concentrations thereof lower than 0.1% by weight are undesirable because application of this inorganic coating composition is apt to result in coating unevenness. Solid concentrations thereof exceeding 20% by weight are undesirable because this coating composition has impaired applicability. The solid concentration of the inorganic coating composition is especially preferably 0.1-10% by weight.

In the inorganic coating composition of the invention, the content of the alumina particles is preferably 10-80 parts by weight per 100 parts by weight of all solid components. Alumina particle contents lower than 10 parts by weight are undesirable because there is a possibility that the coating film might have reduced hydrophilicity. On the other hand, contents thereof exceeding 80 parts by weight are undesirable because there is a possibility that the coating film might have reduced mechanical strength. The content of the alumina particles is especially preferably 20-60 parts by weight.

In the inorganic coating composition of the invention, the content of the present silicic acid oligomer or the present colloidal silica is preferably 20-90 parts by weight per 100 parts by weight of all solid components. Contents of the present silicic acid oligomer or the present colloidal silica lower than 20 parts by weight are undesirable because there is a possibility that the film to be obtained might have reduced mechanical strength. On the other hand, contents thereof exceeding 90 parts by weight are undesirable because there is a possibility that the coating film to be obtained might have reduced hydrophilicity. The content of the present silicic acid oligomer or the present colloidal silica is especially preferably 40-80 parts by weight.

In the inorganic coating composition of the invention, the content of the surface is preferably 1-500 ppm. Contents of the surfactant lower than 1 ppm are undesirable because there is a possibility that this inorganic coating composition might have reduced wetting properties and hence impaired applicability. On the other hand, contents thereof exceeding 500 ppm are undesirable because there is a possibility that the coating film to be obtained might have reduced appearance quality. The content of the surfactant is especially preferably 10-400 ppm.

When applied to an organic base material, the inorganic coating composition of the invention can form a hydrophilic coating film thereon. As the organic base material, various ones can be suitably used according to need. However, it is preferred to use a base comprising a polycarbonate or an acrylic resin. The shape of the base material is not limited to a flat plate and may be one which wholly or partly has a curvature. The hydrophilicity of the coating film to be obtained can be evaluated in terms of contact angle with water. The contact angle of the coating film to be obtained is preferably 20° or smaller. Contact angles thereof exceeding 20° are undesirable because this coating film obtained has insufficient hydrophilicity. The contact angle thereof is especially preferably 10° or smaller, most preferably 5° or smaller.

Use of the inorganic coating composition of the invention is preferred because the coating film obtained by applying the composition has excellent transparency. The coating composition is especially suitable for use in the case where the organic base material is transparent. Transparency can be evaluated in terms of haze. The haze of the coating film obtained is preferably 2% or lower. Values of the haze thereof exceeding 2% are undesirable because this coating film has impaired transparency and a reduced transmittance. The haze of the coating film to be obtained is especially preferably 1% or lower.

The inorganic coating composition of the invention can be applied by known methods. Examples thereof include brush coating, roller coating, hand coating, spin coating, dip coating, coating by various printing techniques, curtain flow coating, die coating, flow coating, and spray coating. For the purpose of enhancing the mechanical strength of the coating film, heating or irradiation with electromagnetic waves (ultraviolet, electron beams, etc.) may be conducted according to need. Although heating conditions may be determined while taking account of the heat resistance of the organic base material, a temperature of 60-100°C is preferred. In applying the inorganic coating composition of the invention, there is no need of especially subjecting the organic base material to a pretreatment. However, the organic base material can be subjected to a discharge treatment such as plasma treatment, corona treatment, UV treatment, or ozone treatment, a chemical treatment with water, an acid, an alkali, etc., or a physical treatment with an abrasive material, for the purpose of further enhancing the adhesion of the coating film.

In the invention, the thickness of the coating film to be obtained is preferably 30-3,000 nm. Coating film thicknesses smaller than 30 nm are undesirable because there is a possibility that hydrophilicity and the prolonged retention of this effect might decrease. Coating film thicknesses exceeding 3,000 nm are undesirable because cracking is apt to occur and interference fringes generate. In addition, when this coating film is marred, these mars are apt to be conspicuous. The coating film especially preferably has a thickness of 50-1,000 nm.

### Examples

Examples 1 to 3, Examples 5 to 7, Example 13, Example 14, and Examples 16 to 20 are shown below as Examples of the invention. Furthermore, Example 4, Examples 8 to 12, Example 15, and Example 16 are shown below as Comparative Examples. Hereinafter, % by weight is indicated simply by %.

### [EXAMPLE 1]

To 308 g of an aqueous aluminum chloride solution (trade name, Takibine #100; manufactured by Taki Chemical Co., Ltd.; Al₂O₃ concentration, 11.5%; Cl concentration, 24.5%; the same applies hereinafter) was added 1,343 g of water. Thereto was added 243 g of an aqueous sodium aluminate solution (Type #2019, manufactured by Asada Chemical Industry Co., Ltd.; Al₂O₃ concentration, 20%; Na₂O concentration, 19%; the same applies hereinafter) with stirring. Subsequently, this liquid was heated to 95°C and 106 g of an aqueous sodium aluminate solution was then added again with stirring. Thereafter, the resultant mixture was aged for 24 hours while keeping the liquid temperature at 95°C with stirring to obtain a slurry. Incidentally, the pH of the liquid just after the sodium aluminate addition at 95°C was 9.2. The slurry obtained through aging was purified with an ultrafiltration apparatus and then reheated to 95°C. Amidosulfuric acid was added thereto in an amount equal to 3% of the total solid component amount in the purified slurry, and the resultant mixture was concentrated under reduced pressure until the total solid concentration reached 22.4%. Thereafter, the concentrate was subjected to an ultrasonic dispersion treatment to obtain alumina sol A.

The alumina sol A obtained had an aggregate diameter of 80 nm (primary-particle diameter of 8 nm). Furthermore, a xerogel obtained by removing the solvent from this alumina sol A was examined by X-ray diffractometry. As a result, the xerogel was ascertained to be boehmite. The xerogel obtained had a pore volume of 0.8 mL/g. Incidentally, the aggregate diameter was measured with a particle size analyzer based on the dynamic light-scattering method (Microtrac UPA, manufactured by Nikkiso Co., Ltd.), and the pore volume of the xerogel was measured with a nitrogen adsorption/desorption apparatus (Autosorb Type 3B, manufactured by Quantachrome Instruments).

Subsequently, 12.5 g of sodium silicate No. 4 was added to 37.5 g of water, and 30 g of a cation-exchange resin (trade name, SK1BH; manufactured by Mitsubishi Chemical Corp.) was further added thereto. The resultant mixture was stirred at room temperature for 10 minutes to obtain a silicic acid oligomer. Distilled water was added to this silicic acid oligomer to obtain silicic acid oligomer A, which had a concentration of 5%. In the silicic acid oligomer A obtained, 99% of the alkali metal had been removed.

Into a reaction vessel made of glass were introduced 2 g of alumina sol A, 8 g of silicic acid oligomer A, 42 g of isopropanol, 40 g of methanol, and 5 g of N,N-dimethylformamide (boiling point at a pressure of 0.1 MPa, 153°C; solubility in water, soluble in any ratio). The ingredients were mixed together. Thereafter, 3 g of a 0.1% ethanol solution of a nonionic surfactant (trade name, L-77; manufactured by Nippon Unicar Co., Ltd.) was added thereto, and the resultant mixture was stirred at 20°C for 1 hour to obtain an inorganic coating composition having a solid concentration of 0.85%. The inorganic coating composition obtained had a sodium ion concentration of 28 ppm. Incidentally, the concentration of N,N-dimethylformamide was 5%, and the contents of water, alumina particles, and the silicic acid oligomer were 1,080 parts by weight, 53 parts by weight, and 47 parts by weight, respectively, per 100 parts by weight of the solid components of the inorganic coating composition.

### [Evaluation Test]

The inorganic coating composition obtained was applied in an amount of 1.2 g to a polycarbonate plate (100 mm x 100 mm; thickness, 3.5 mm) cleaned with ethanol. Spin coating was conducted at a rotation speed of 150 rpm for 70 seconds, and the composition applied was dried at 100°C for 10 minutes to form a coating film having a thickness of 320 nm.

The sample having the coating film thus formed was evaluated by the methods shown below. The results of the evaluations are shown in Table 1.
In appearance evaluation, the coating film obtained was visually evaluated for coating unevenness. The samples having a satisfactory appearance with no coating unevenness are rated as A, and the samples which had coating unevenness and were impractical are rated as C.
Transparency was evaluated in terms of haze. A haze measurement was made in accordance with JIS K-7105. The haze of the coating film on the base was measured with a haze computer (Type, HGM-3DP; manufactured by Suga Test Instruments Co., Ltd.). The samples having a haze of 2% or lower were judged acceptable, and those having a haze exceeding 2% were judged unacceptable.

Hydrophilicity was evaluated in terms of contact angle between the coating film and water. The contact angle of water with the coating film surface was measured with a contact angle meter (Type, CA-X150; manufactured by Kyowa Interface Science Co., Ltd.). The measurement was made on arbitrarily selected five points, and the average thereof was calculated.
In the evaluation of prolonged retention of hydrophilicity, the sample was allowed to stand for 1 month in an environment having a temperature of 25°C and a humidity of 50% and the coating film was evaluated for hydrophilicity after the standing.

Antifogging properties were evaluated by breathing on the surface of the coating film and examining the surface for fogging: the case where no fogging occurs is indicated by AA; the case where the coating film partly fogs upon breathing but rapidly becomes transparent is indicated by A; the case where the coating film mostly fogs upon breathing but rapidly becomes transparent is indicated by B; and the case where the coating film fogs upon breathing and necessitates much time before it becomes transparent is indicated by C. Incidentally, the cases which are practically usable are AA, A, and B.
In the evaluation of prolonged retention of antifogging properties, the coated sample was allowed to stand for 1 month in an environment having a temperature of 25°C and a humidity of 50% and then the antifogging property evaluation described above was conducted.

In the evaluation of antifouling properties, the coated sample was subjected to outdoor exposure for 1 month in the state of being inclined at 45°. Thereafter, the sample was recovered and distilled water was sprinkled on the coating film surface of the sample. The area in which hydrophilicity was retained was determined through visual examination. The case where hydrophilicity is retained in an area of 90% or larger is rated as A; the case where hydrophilicity is retained in an area of 50% or larger is rated as B; and the case where hydrophilicity is retained only in an area smaller than 50% is rated as C.

In adhesion evaluation, Cellophane Tape was applied to the coating film of the sample and this Cellophane Tape was stripped off to visually examine the coating film for peeling. The case where the coating film suffered no peeling is indicated by A; the case where the coating film partly peeled off but remained unpeeled over an area not smaller than a half is indicated by B; and the case where the coating film peeled off over an area not smaller than a half is indicated by C.

In wear resistance evaluation, the coating film surface of the sample was worn by rubbing the surface with a cotton cloth forward and backward 100 times and the coating film was then visually examined for peeling. The case where the coating film suffered no peeling is indicated by A; the case where the coating film partly peeled off but remained unpeeled over an area not smaller than a half is indicated by B; and the case where the coating film peeled off over an area not smaller than a half is indicated by C.

### [EXAMPLE 2]

An alumina sol was produced in a manner similar to that in Example 1. Namely, 1,235 g of water was added to 360 g of an aqueous aluminum chloride solution. Thereto was added 127 g of an aqueous sodium aluminate solution with stirring. This liquid was heated to 95°C and 278 g of an aqueous sodium aluminate solution was then added again with stirring. Thereafter, the resultant mixture was aged for 48 hours while keeping the liquid temperature at 95°C with stirring to obtain a slurry. Incidentally, the pH of the liquid just after the sodium aluminate addition at 95°C was 8.8. The slurry obtained through aging was purified with an ultrafiltration apparatus and then reheated to 95°C. Amidosulfuric acid was added thereto in an amount equal to 3% of the total solid component amount in the purified slurry, and the resultant mixture was concentrated under reduced pressure until the total solid concentration reached 22.4%. Thereafter, the concentrate was subjected to an ultrasonic dispersion treatment to obtain alumina sol B.

The alumina sol B obtained had an aggregate diameter of 170 nm (primary-particle diameter of 10 nm). Furthermore, a xerogel obtained by removing the solvent from this alumina sol B was examined by X-ray diffractometry. As a result, the xerogel was ascertained to be boehmite. This xerogel had a pore volume of 0.95 mL/g.

An inorganic coating composition was obtained in the same manner as in Example 1, except that alumina sol B was used in placed of alumina sol A. Incidentally, the concentration of N,N-dimethylformamide was 5%, and the contents of water, alumina particles, and the silicic acid oligomer were 1,080 parts by weight, 53 parts by weight, and 47 parts by weight, respectively, per 100 parts by weight of the solid components of the inorganic coating composition.
The inorganic coating composition obtained was used to form a coating film in the same manner as in Example 1. The results of the evaluations of the coating film obtained are shown in Table 1.

### [EXAMPLE 3]

Water was added to alumina sol AS-2 (boehmite; primary-particle diameter, 8 nm; aggregate diameter, 130nm; pore volume of xerogel obtained by solvent removal from the alumina sol, 0.3 mL/g), manufactured by Catalysts & Chemicals Industries Co., Ltd., to obtain alumina sol C, which had a concentration of 7%.

An inorganic coating composition was obtained in the same manner as in Example 1, except that 6.4 g of alumina sol C was used in place of alumina sol A and methanol was used in an amount of 35.6 g. Incidentally, the concentration of N,N-dimethylformamide was 5%, and the contents of water, alumina particles, and the silicic acid oligomer were 1,600 parts by weight, 53 parts by weight, and 47 parts by weight, respectively, per 100 parts by weight of the solid components of the inorganic coating composition.
The inorganic coating composition obtained was used to form a coating film in the same manner as in Example 1. The results of the evaluations of the coating film obtained are shown in Table 1.

### [EXAMPLE 4 (Comparative Example)]

Water was added to alumina sol AS-3 (boehmite; primary-particle diameter, 6 nm; aggregate diameter, 500 nm; pore volume of xerogel obtained by solvent removal from the alumina sol, 0.75 mL/g), manufactured by Catalysts & Chemicals Industries Co., Ltd., to obtain alumina sol D, which had a concentration of 7%.

An inorganic coating composition was obtained in the same manner as in Example 1, except that alumina sol D was used in place of alumina sol C in Example 3. Incidentally, the concentration of N,N-dimethylformamide was 5%, and the contents of water, alumina particles, and the silicic acid oligomer were 1,600 parts by weight, 53 parts by weight, and 47 parts by weight, respectively, per 100 parts by weight of the solid components of the inorganic coating composition.
The inorganic coating composition obtained was used to form a coating film in the same manner as in Example 1. The results of the evaluations of the coating film obtained are shown in Table 1.

### [EXAMPLE 5]

An inorganic coating composition was obtained in the same manner as in Example 1, except that the amounts of alumina sol A and silicic acid oligomer A were changed to 3.5 g and 6.5 g, respectively. Incidentally, the concentration of N,N-dimethylformamide was 5%, and the contents of water, alumina particles, and the silicic acid oligomer were 800 parts by weight, 71 parts by weight, and 39 parts by weight, respectively, per 100 parts by weight of the solid components of the inorganic coating composition.
The inorganic coating composition obtained was used to form a coating film in the same manner as in Example 1. The results of the evaluations of the coating film obtained are shown in Table 1.

### [EXAMPLE 6]

An inorganic coating composition was obtained in the same manner as in Example 1, except that the amounts of alumina sol A and silicic acid oligomer A were changed to 1 g and 9 g, respectively. Incidentally, the concentration of N,N-dimethylformamide was 5%, and the contents of water, alumina particles, and the silicic acid oligomer were 1,380 parts by weight, 33 parts by weight, and 67 parts by weight, respectively, per 100 parts by weight of the solid components of the inorganic coating composition.
The inorganic coating composition obtained was used to form a coating film in the same manner as in Example 1. The results of the evaluations of the coating film obtained are shown in Table 1.

### [EXAMPLE 7]

To 58.9 g of ethanol was added 12.8 g of tetramethoxysilane (manufactured by Junsei Chemical Co., Ltd.; reagent of special grade). The resultant mixture was stirred for 10 minutes. Thereafter, 28.3 g of an aqueous nitric acid solution having a concentration of 1% was gradually added thereto to hydrolyze the silane. Thus, silicic acid oligomer B was obtained, which had a concentration of 5%.

An inorganic coating composition was obtained in the same manner as in Example 1, except that silicic acid oligomer B was used in placed of silicic acid oligomer A. Incidentally, the concentration of N,N-dimethylformamide was 5%, and the contents of water, alumina particles, and the silicic acid oligomer were 450 parts by weight, 53 parts by weight, and 47 parts by weight, respectively, per 100 parts by weight of the solid components of the inorganic coating composition.
The inorganic coating composition obtained was used to form a coating film in the same manner as in Example 1. The results of the evaluations of the coating film obtained are shown in Table 1.

### [EXAMPLE 8 (Comparative Example)]

An inorganic coating composition was obtained in the same manner as in Example 1, except that no surfactant was used. Incidentally, the concentration of N,N-dimethylformamide was 5%, and the contents of water, alumina particles, and the silicic acid oligomer were 1,080 parts by weight, 53 parts by weight, and 47 parts by weight, respectively, per 100 parts by weight of the solid components of the inorganic coating composition.
The inorganic coating composition obtained was used to form a coating film in the same manner as in Example 1.
The results of the evaluations of the coating film obtained are shown in Table 1.

### [EXAMPLE 9 (Comparative Example)]

An inorganic coating composition was obtained in the same manner as in Example 1, except that silicic acid oligomer A was not used and the amounts of alumina sol A, water, and isopropanol were changed to 10 g, 20 g, and 22 g, respectively. Incidentally, the concentration of N,N-dimethylformamide was 5%, and the contents of water and alumina particles were 1,240 parts by weight and 100 parts by weight, respectively, per 100 parts by weight of the solid components of the inorganic coating composition.
The inorganic coating composition obtained was used to form a coating film in the same manner as in Example 1. The results of the evaluations of the coating film obtained are shown in Table 1.

### [EXAMPLE 10 (Comparative Example)]

An inorganic coating composition was obtained in the same manner as in Example 1, except that alumina sol A was not used and the amount of silicic acid oligomer A was changed to 10 g. Incidentally, the concentration of N,N-dimethylformamide was 5%, and the contents of water and the silicic acid oligomer were 1,900 parts by weight and 100 parts by weight, respectively, per 100 parts by weight of the solid components of the inorganic coating composition.
The inorganic coating composition obtained was used to form a coating film in the same manner as in Example 1. The results of the evaluations of the coating film obtained are shown in Table 1.

### [EXAMPLE 11 (Comparative Example)]

The same procedure as in Example 1 was conducted, except that water glass was used as it was in place of silicic acid oligomer A. As a result, a precipitate generated and, hence, the resultant composition was unusable as an inorganic coating composition.

### [EXAMPLE 12 (Comparative Example)]

An inorganic coating composition was obtained in the same manner as in Example 1, except that N,N-dimethylformamide was not used.
The inorganic coating composition obtained was used to form a coating film in the same manner as in Example 1. The results of the evaluations of the coating film obtained are shown in Table 1.

### [EXAMPLE 13]

An inorganic coating composition was obtained in the same manner as in Example 1, except that N,N-dimethylacetamide (boiling point at a pressure of 0.1 MPa, 166°C; solubility in water, soluble in any ratio) was used in place of N,N-dimethylformamide. Incidentally, the concentration of N,N-dimethylacetamide was 5%.
The inorganic coating composition obtained was used to form a coating film in the same manner as in Example 1. The results of the evaluations of the coating film obtained are shown in Table 1.

### [EXAMPLE 14]

An inorganic coating composition was obtained in the same manner as in Example 1, except that N-methyl-2-pyrrolidinone (boiling point at a pressure of 0.1 MPa, 202°C; solubility in water, soluble in any ratio) was used in place of N,N-dimethylformamide. Incidentally, the concentration of N-methyl-2-pyrrolidinone was 5%.
The inorganic coating composition obtained was used to form a coating film in the same manner as in Example 1. The results of the evaluations of the coating film obtained are shown in Table 1.

### [EXAMPLE 15 (Comparative Example)]

An inorganic coating composition was obtained in the same manner as in Example 1, except that tetrahydrofuran (boiling point at a pressure of 0.1 MPa, 66°C; solubility in water, soluble in any ratio) was used in place of N,N-dimethylformamide. Incidentally, the concentration of tetrahydrofuran was 5%.
The inorganic coating composition obtained was used to form a coating film in the same manner as in Example 1. The results of the evaluations of the coating film obtained are shown in Table 1.

### [EXAMPLE 16 (Comparative Example)]

An inorganic coating composition was obtained in the same manner as in Example 1, except that the amounts of isopropanol and N,N-dimethylformamide were changed to 32 g and 15 g, respectively. Incidentally, the concentration of N,N-dimethylformamide was 15%, and the content of water was 1,080 parts by weight per 100 parts by weight of the solid components of the inorganic coating composition.
The inorganic coating composition obtained was used to form a coating film in the same manner as in Example 1. The results of the evaluations of the coating film obtained are shown in Table 1.

### [EXAMPLE 17]

An inorganic coating composition was obtained in the same manner as in Example 1, except that a fluorochemical nonionic surfactant (C₆F₁₇CH₂CH₂CH(CH₃)O(CH₂CH₂O)ₓ(CH₂CH(CH₃)O)_{y}H; x:y=70:30; x+y=5.72; average molecular weight, 800) was used in place of nonionic surfactant "L-77".
The inorganic coating composition obtained was used to form a coating film in the same manner as in Example 1. The results of the evaluations of the coating film obtained are shown in Table 1.

### [EXAMPLE 18]

Poly(vinyl alcohol) (trade name, Poval 124; manufactured by Kuraray Co., Ltd.) was mixed with water to obtain an aqueous poly(vinyl alcohol) solution having a concentration of 3%.

An inorganic coating composition having a solid concentration of 1.1% was obtained in the same manner as in Example 1, except that the amounts of methanol and the surfactant solution were changed to 28.5 g and 6 g, respectively, and that 8.5 g of the aqueous poly(vinyl alcohol) solution was added. Incidentally, the concentration of N,N-dimethylformamide was 5%, and the contents of water, alumina particles, and the silicic acid oligomer were 1,350 parts by weight, 41 parts by weight, and 36 parts by weight, respectively, per 100 parts by weight of the solid components of the inorganic coating composition.
The inorganic coating composition obtained was used to form a coating film in the same manner as in Example 1. The results of the evaluations of the coating film obtained are shown in Table 1.

### [EXAMPLE 19]

An acrylic ester copolymer dispersion (trade name, Jurymer APO-601N; manufactured by Nihon Junyaku Co., Ltd.; solid concentration, 17 %) was mixed with water to obtain an acrylic ester copolymer dispersion having a concentration of 3%.

An inorganic coating composition having a solid concentration of 1.1% was obtained in the same manner as in Example 18, except that the acrylic ester copolymer dispersion was used in place of the aqueous poly(vinyl alcohol) solution. Incidentally, the concentration of N,N-dimethylformamide was 5%, and the contents of water, alumina particles, and the silicic acid oligomer were 1,350 parts by weight, 41 parts by weight, and 36 parts by weight, respectively, per 100 parts by weight of the solid components of the inorganic coating composition.
The inorganic coating composition obtained was used to form a coating film in the same manner as in Example 1. The results of the evaluations of the coating film obtained are shown in Table 1.

### [EXAMPLE 20]

An inorganic coating composition was obtained in the same manner as in Example 1, except that N-methyl-2-pyrrolidinone (boiling point at a pressure of 0.1 MPa, 202°C; solubility in water, soluble in any ratio) was used in place of N,N-dimethylformamide and that a poly(methyl methacrylate) base was used in place of the polycarbonate base. Incidentally, the concentration of N-methyl-2-pyrrolidinone was 5%.
The inorganic coating composition obtained was used to form a coating film in the same manner as in Example 1. The results of the evaluations of the coating film obtained are shown in Table 1.

[Table 1]

**Table 1**

| | Appearance | Haze (%) | Hydrophilicity | Prolonged retention of hydrophilicity | Anti-fogging property | Prolonged retention of anti-fogging property | Anti-fouling property | Adhesion | Wear resistance |
|---|---|---|---|---|---|---|---|---|---|
| Example 1 | A | 0.6 | 5° | 9° | AA | A | A | A | A |
| Example 2 | A | 0.9 | 3° | 6° | AA | A | A | A | A |
| Example 3 | A | 0.4 | 8° | 13° | A | B | B | A | A |
| Example 4 | A | 2.5 | 3° | 6° | AA | A | A | A | B |
| Example 5 | A | 0.8 | 3° | 8° | AA | A | A | A | B |
| Example 6 | A | 0.4 | 8° | 13° | A | 8 | 8 | A | A |
| Example 7 | A | 0.6 | 5° | 10° | AA | A | A | A | A |
| Example 8 | C | 0.6 | 5° | 10° | AA | A | A | A | A |
| Example 9 | A | 0.9 | 3° | 6° | AA | A | A | A | C |
| Example 10 | A | 0.2 | 12° | 22° | A | C | C | A | A |
| Example 12 | A | 0.6 | 5° | 9° | AA | A | A | C | C |
| Example 13 | A | 0.6 | 5° | 9° | AA | A | A | A | A |
| Example 14 | A | 0.6 | 5° | 9° | AA | A | A | A | A |
| Example 15 | A | 0.6 | 5° | 9° | AA | A | A | C | C |
| Example 16 | C | 2.5 | 6° | 11° | A | B | B | A | A |
| Example 17 | A | 0.6 | 3° | 4° | AA | AA | A | A | A |
| Example 18 | A | 0.6 | 9° | 15° | A | B | B | A | A |
| Example 19 | A | 0.6 | 9° | 15° | A | B | B | A | A |
| Example 20 | A | 0.6 | 5° | 9° | AA | A | A | A | A |

While the invention has been described in detail and with reference to specific embodiments thereof, it will be apparent to one skilled in the art that various changes and modifications can be made therein without departing from the spirit and scope thereof.
This application is based on Japanese Patent Application No. 2004-113277 filed on April 7, 2004, the contents thereof being herein incorporated by reference.

### Industrial Applicability

By the use of the inorganic coating composition of the invention, a hydrophilic film can be imparted to various articles having organic base materials, such as the covers of various lamps, spectacle lenses, goggles, covers of various instruments, and agricultural films.

## Claims

1. An inorganic coating composition capable of forming a hydrophilic coating film on an organic base material, the organic coating composition comprising:
alumina particles whose aggregates in a dispersion medium have an average particle diameter of 20-400 nm;
either a silicic acid oligomer from which 95% or more of the alkali metal has been removed, or a colloidal silica obtained by aging the oligomer;
a surfactant;
a water-miscible organic solvent which is capable of swelling or dissolving the organic base material and has a boiling point of 120°C or higher at an atmospheric pressure of 0.1 MPa; and
water,
wherein the content of water is 400-1,700 parts by weight per 100 parts by weight of all solid components of the inorganic coating composition, and the inorganic coating composition has a concentration of the organic solvent of 1-10% by weight and a solid concentration of 0.1-20% by weight.

2. The inorganic coating composition of claim 1, wherein the organic base material comprises a polycarbonate or an acrylic resin.

3. The inorganic coating composition of claim 1 or 2, wherein the organic solvent comprises any one member selected from the group consisting of diglyme, N,N-dimethylformamide, N,N-dimethylacetamide, ethyl acetoacetate, N-methyl-2-pyrrolidinone, 1,3-dimethyl-2-imidazolidinone, and dimethyl sulfoxide.

4. The inorganic coating composition of any one of claims 1 to 3, wherein the content of the alumina particles and the content of the silicic acid oligomer or of the colloidal silica obtained by aging the oligomer are 10-80 parts by weight and 20-90 parts by weight, respectively, per 100 parts by weight of all solid components of the inorganic coating composition.

5. The inorganic coating composition of any one of claims 1 to 4, wherein the alumina particles have the crystal structure of boehmite or γ-alumina.

6. The inorganic coating composition of any one of claims 1 to 5, which contains a hydrophilic polymer.

7. A hydrophilic coating film obtained by applying the inorganic coating composition of any one of claims 1 to 6 to an organic base material.

8. The hydrophilic coating film of claim 7, which has a contact angle with water of 20° or smaller.
